# EUROPÄISCHE PATENTSCHRIFT

(11) **EP 3 938 803 B1**
(45) Veröffentlichungstag und Bekanntmachung des Hinweises auf die Patenterteilung: **15.07.2026**
(21) Anmeldenummer: 20713843.9
(22) Anmeldetag: 10.03.2020
(51) Int. Cl.: G01S 17/42, G01S 17/931, G01S 7/481

(54) **LICHTSIGNALUMLENKEINRICHTUNG FÜR EIN OPTISCHES MESSSYSTEM ZUR ERFASSUNG VON OBJEKTEN, MESSSYSTEM UND VERFAHREN ZUM BETREIBEN EINER LICHTSIGNALUMLENKEINRICHTUNG**
LIGHT SIGNAL DEFLECTING DEVICE FOR AN OPTICAL MEASURING SYSTEM FOR DETECTING OBJECTS, MEASURING SYSTEM, AND METHOD FOR OPERATING A LIGHT SIGNAL DEFLECTING DEVICE
DISPOSITIF DE DÉVIATION DE SIGNAL LUMINEUX POUR UN SYSTÈME DE MESURE OPTIQUE DESTINÉ À DÉTECTER DES OBJETS, SYSTÈME DE MESURE ET PROCÉDÉ PERMETTANT DE FAIRE FONCTIONNER UN DISPOSITIF DE DÉVIATION DE SIGNAL LUMINEUX

(30) Priorität: 12.03.2019 DE 102019106267
(43) Veröffentlichungstag der Anmeldung: 19.01.2022
(73) Patentinhaber: Valeo Schalter und Sensoren GmbH, 74321 Bietigheim-Bissingen (DE)
(72) Erfinder: NGUYEN, Ho-Hoai-Duc, 74321 Bietigheim-Bissingen (DE); SCHULER, Thomas, 74321 Bietigheim-Bissingen (DE); NIES, Jürgen, 74321 Bietigheim-Bissingen (DE); SIMON, Jan, 74321 Bietigheim-Bissingen (DE); MÜLLER, Felix, 74321 Bietigheim-Bissingen (DE)
(74) Vertreter: Pothmann, Karsten
(86) Internationale Anmeldenummer: PCT/EP2020/056287
(87) Internationale Veröffentlichungsnummer: WO 2020/182782

(56) Entgegenhaltungen:
- EP-A1- 2 378 309
- EP-A2- 2 983 030
- DE-A1- 102006 034 907

## Beschreibung

### Technisches Gebiet

Die Erfindung betrifft eine Lichtsignalumlenkeinrichtung für ein optisches Messsystem zur Erfassung von Objekten in einem Überwachungsbereich,
- mit wenigstens einem Umlenkkörper, der wenigstens einen Umlenkbereich zur Umlenkung von Lichtsignalen aufweist,
- mit wenigstens einer Antriebseinrichtung, mit der der wenigstens eine Umlenkkörper so angetrieben werden kann, dass der wenigstens eine Umlenkbereich relativ zu jeweiligen Ausbreitungsachsen von Lichtsignalen, welche auf den wenigstens einen Umlenkbereich treffen, bewegt werden kann.

Ferner betrifft die Erfindung ein optisches Messsystem zur Erfassung von Objekten in einem Überwachungsbereich,
- mit wenigstens einer Sendeeinrichtung, mit der Lichtsignale erzeugt werden können,
- mit wenigstens einer Lichtsignalumlenkeinrichtung, mit der Lichtsignale umgelenkt werden können,
- und mit wenigstens einer Empfangseinrichtung, mit der Lichtsignale empfangen werden können,
- wobei die wenigstens eine Lichtsignalumlenkeinrichtung aufweist
- wenigstens einen Umlenkkörper, der wenigstens eine Umlenkbereich aufweist zur Umlenkung von Lichtsignalen, und
- wenigstens eine Antriebseinrichtung, mit der der wenigstens eine Umlenkkörper so angetrieben werden kann, dass der wenigstens eine Umlenkbereich relativ zu jeweiligen Ausbreitungsachsen von Lichtsignalen, welche auf den wenigstens einen Umlenkbereich treffen, bewegt werden kann.

Außerdem betrifft die Erfindung ein Verfahren zum Betreiben einer Lichtsignalumlenkeinrichtung für ein optisches Messsystem zur Erfassung von Objekten in einem Überwachungsbereich,
- bei dem Lichtsignale mit wenigstens einem Umlenkbereich wenigstens eines Umlenkkörpers umgelenkt werden,
- wobei der wenigstens eine Umlenkkörper mit wenigstens einer Antriebseinrichtung so angetrieben wird, dass der wenigstens eine Umlenkbereich relativ zu jeweiligen Ausbreitungsachsen von Lichtsignalen, welche auf den wenigstens einen Umlenkbereich treffen, bewegt wird.

### Stand der Technik

Aus der WO 2014/095105 A1 ist eine optische Objekterfassungseinrichtung für ein Kraftfahrzeug bekannt, mit einer Sendeeinheit zum Aussenden eines Sendelichtstrahls, mit einer Empfangseinheit zum Empfangen eines Empfangslichtstrahls und mit einer elektronischen Auswerteeinrichtung zum Detektieren eines fahrzeugexternen Objekts in einer Umgebung des Kraftfahrzeugs abhängig von dem Empfangsstrahl. Die Sendeeinheit weist einen Sender zum Erzeugen des Sendelichtstrahls, einen steuerbaren Mikroschwingspiegel auf, mit welchem der Sendelichtstrahl zumindest in einer Schwenkrichtung verschwenkbar ist, und eine im Sendestrahlengang hinter dem Mikroschwingspiegel angeordnete Sendelinse auf.

Die EP 2 378 309 A1 betrifft einen opto-elektronischen Sensor mit einem Lichtsensor zum Aussenden eines Lichtstrahls in einen Überwachungsbereich und einem Lichtempfänger zum Erzeugen eines Empfangssignals, aus dem Objekte im Überwachungsbereich erkannt werden können. Zur Ablenkung der ein- und ausgehenden Lichtstrahlen ist eine konkav gewölbte Ablenkeinheit in Form eines Hohlspiegels vorgesehen, die mittels eines Antriebs um eine Drehachse rotiert wird.

Die DE 10 2006 034907 A1 betrifft ein Laser-Scanning-Mikroskop zur spezifischen Anregung von verschiedenen Farbstoffe in einem Präparat durch einen LSM Laser mit verschiedenen Wellenlängen mit einem Beleuchtungsstrahlengang zur Beleuchtung einer Probe und einem Detektionsstrahlengang zur Detektion des Probenlichtes. Dabei ist im Detektionsstrahlengang ein dispersives Element zur wellenlängenabhängigen Aufspaltung des Probenlichtes vorgesehen, um über erste und zweite Detektoren unterschiedliche Wellenlängenbereiche zu detektieren, wobei mindestens ein Wellenlängenbereich des aufgespaltenen Probenlichtes über ein verstellbares reflektierendes Element in Richtung der Detektion umgelenkt wird. Als verstellbares reflektierendes Element ist dabei ein motorisch verschiebbarer, planarer Spiegel vorgesehen, der in die Spektralverteilung hineinragt und einen wählbaren Teil des Detektionslichtes in Richtung des zweiten Detektors reflektiert.

Die EP 2 983 030 A2 offenbart einen gattungsgemäßen Mehr-Ebenen-Scanner zur Erfassung von Objekten in einem Überwachungsbereich mit einer drehbaren Spiegeleinheit zur Ablenkung eines Lichtstrahls, die mehrere ringförmig und gegeneinander verkippt angeordneten Spiegelfacetten aufweist. Die Spiegelfacetten können dabei als Freiformflächen mit ausgleichender Kontur ausgebildet sein.

Der Erfindung liegt die Aufgabe zugrunde, eine Lichtsignalumlenkeinrichtung, ein Messsystem und ein Verfahren der eingangs genannten Art zu gestalten, mit denen Lichtsignale besser, insbesondere einfacher, zuverlässiger und/oder sicherer, umgelenkt werden können.

### Offenbarung der Erfindung

Diese Aufgabe wird erfindungsgemäß bei der Lichtsignalumlenkeinrichtung dadurch gelöst, dass wenigstens ein Umlenkbereich wenigstens teilweise gekrümmt ist.

Erfindungsgemäß weist wenigstens ein Umlenkbereich wenigstens eine Krümmung auf. Durch entsprechendes Bewegen des Umlenkkörpers relativ zu der Ausbreitungsachse eines Lichtsignals wird eine Auftreffstelle, in der das Lichtsignal auf den wenigstens einen Umlenkbereich trifft, verändert. Aufgrund der Krümmung des wenigstens einen Umlenkbereichs trifft durch die Bewegung des Umlenkkörpers ein und dieselbe Ausbreitungsachse mit unterschiedlichen Einfallswinkeln auf unterschiedliche Auftreffstellen. Auf diese Weise wird das Lichtsignal je nach Auftreffstelle unterschiedlich umgelenkt. So kann durch einfaches Bewegen des wenigstens einen Umlenkbereichs ein Schwenken der Ausbreitungsachsen der Lichtsignale bewirkt werden.

Ferner kann aufgrund des einfachen Aufbaus ein Justageaufwand für die Lichtsignalumlenkeinrichtung und somit des Messsystems verringert werden.

Durch die entsprechenden Krümmungen kann ein entsprechender Überwachungsbereich des Messsystems flexibel und gezielt abgetastet werden. Der Überwachungsbereich ist durch den Sichtbereich des Messsystems definiert. Der Sichtbereich des Messsystems kann durch ein entsprechendes Design des Umlenkbereichs individuell angepasst werden.

Ferner kann durch die Wahl der jeweiligen Krümmung eine Auflösung des Messsystems gezielt beeinflusst werden. Die Auflösung kann durch eine Dichte von Messungen in einem Ausschnitt des Überwachungsbereichs charakterisiert werden. Je mehr Messungen in einem Ausschnitt des Überwachungsbereichs durchgeführt werden, desto größer ist die Auflösung.

Vorteilhafterweise kann durch entsprechende Krümmung des wenigstens einen Umlenkbereichs insbesondere im Zentrum des Überwachungsbereichs eine größere Auflösung vorgegeben werden als im Randbereich. Insbesondere bei der Verwendung des Messsystems zur Überwachung eines Überwachungsbereichs in Fahrtrichtung vor oder hinter einem Kraftfahrzeug kann im Zentrum des Überwachungsbereichs eine größere Auflösung erforderlich sein, da dort eine größere Kollisionsgefahr für Objekte besteht. Im Randbereich ist die Kollisionsgefahr entsprechend geringer, sodass dort eine geringere Auflösung ausreichend sein kann.

Ferner kann durch die Krümmung des wenigstens einen Umlenkbereichs erreicht werden, dass Anforderungen an die Beweglichkeit und/oder die Bewegungsart des wenigstens einen Umlenkkörpers insgesamt verringert werden können. So kann eine Standzeit der Lichtsignalumlenkeinrichtung im Vergleich zu Lichtsignalumlenkeinrichtungen mit rotierenden oder schwingenden Spiegeln vergrößert werden. Außerdem kann mithilfe einer entsprechenden Krümmung des wenigstens einen Umlenkbereichs eine größere Abstrahlfläche realisiert werden. Auf diese Weise kann die Augensicherheit des Messsystems verbessert werden.

Mit der vorgegebenen lokalen Krümmung und Steigung der wenigstens einen Umlenkbereich kann nicht nur die Ausbreitungsachse der umzulenkenden Lichtsignale gelenkt werden, um den Überwachungsbereich zu formen. Außerdem kann die Strahldivergenz der Lichtsignale geändert werden, falls erforderlich.

Vorteilhafterweise kann wenigstens ein Lichtsignal als Lichtpuls realisiert sein. Ein Anfang und ein Ende eines Lichtpulses kann bestimmt, insbesondere gemessen, werden.

Auf diese Weise können insbesondere Lichtlaufzeiten gemessen werden.

Vorteilhafterweise kann wenigstens ein Lichtsignal auch weitere Informationen enthalten. So kann ein Lichtsignal insbesondere codiert sein. Auf diese Weise kann es einfacher identifiziert werden und/oder entsprechende Informationen mit sich tragen.

Die Ausbreitungsachse eines Lichtsignals gibt die mittlere Richtung an, in der sich ein Lichtsignal ausbreitet. Dabei kann das Lichtsignal bezüglich der Ausbreitungsachse fokussiert oder aufgeweitet werden. Das Lichtsignal kann auch in eine Richtung fokussiert und eine andere Richtung aufgeweitet werden. Auf diese Weise kann das Lichtsignal aufgefächert werden.

Vorteilhafterweise kann das optische Messsystem nach einem Lichtlaufzeitverfahren, insbesondere einem Lichtimpulslaufzeitverfahren, arbeiten. Nach dem Lichtimpulslaufzeitverfahren arbeitende optische Messsysteme können als Time-of-Flight- (TOF), Light-Detection-and-Ranging-Systeme (LiDAR), Laser-Detection-and-Ranging-Systeme (LaDAR) oder dergleichen ausgestaltet und bezeichnet werden. Dabei wird eine Laufzeit vom Aussenden eines Lichtsignals mit der Sendeeinrichtung und dem Empfang des entsprechenden reflektierten Lichtsignals mit der entsprechenden Empfangseinrichtung des Messsystems gemessen und daraus eine Entfernung zwischen der Messsystem und dem erfassten Objekt ermittelt.

Vorteilhafterweise kann das optische Messsystem als scannendes System, insbesondere als Laserscanner, ausgestaltet sein. Dabei kann ein Überwachungsbereich mit Lichtsignalen abgetastet, also abgescannt, werden. Dazu können die Ausbreitungsachsen der entsprechenden Lichtsignale über den Überwachungsbereich gewissermaßen geschwenkt werden. Hierbei kommt die Lichtsignalumlenkeinrichtung zum Einsatz.

Das optische Messsystem kann vorteilhafterweise bei einem Fahrzeug, insbesondere einem Kraftfahrzeug, verwendet werden. Vorteilhafterweise kann das Messsystem bei einem Landfahrzeug, insbesondere einem Personenkraftwagen, einem Lastkraftwagen, einem Bus, einem Motorrad oder dergleichen, einem Luftfahrzeug und/oder einem Wasserfahrzeug verwendet werden. Das Messsystem kann auch bei Fahrzeugen eingesetzt werden, die autonom oder teilautonom betrieben werden können. Das Messsystem kann auch in stationärem Betrieb eingesetzt werden.

Mit dem optischen Messsystem können stehende oder bewegte Objekte, insbesondere Fahrzeuge, Personen, Tiere, Hindernisse, Fahrbahnunebenheiten, insbesondere Schlaglöcher oder Steine, Fahrbahnbegrenzungen, Freiräume, insbesondere Parklücken, oder dergleichen, erfasst werden.

Vorteilhafterweise kann das optische Messsystem Teil eines Fahrerassistenzsystems und/oder einer Fahrwerksteuerung eines Fahrzeugs sein oder mit diesen verbunden sein. Die mit dem optischen Messsystem ermittelten Informationen können zur Steuerung von Funktionskomponenten des Fahrzeugs herangezogen werden. Mit den Funktionskomponenten können insbesondere Fahrfunktionen, im Besonderen eine Lenkung, ein Bremssystem und/oder ein Motor, und/oder Signalisierungseinrichtungen des Fahrzeugs gesteuert werden. So kann das Fahrzeug bei Erfassung eines Objekts mit dem optischen Messsystem mit den entsprechenden Funktionskomponenten gelenkt und/oder in seiner Geschwindigkeit geändert, insbesondere gestoppt, werden und/oder wenigstens ein Signal ausgegeben werden.

Erfindungsgemäß ist wenigstens ein Umlenkbereich entlang wenigstens einer Linie oder entlang einer Fläche verschiebbar. Auf diese Weise kann die Auftreffstelle eines Lichtsignals in einen Teil des Umlenkbereichs mit einer anderen Krümmung verschoben werden und damit die Umlenkung des Lichtsignals verändert werden.

Verschiebungen des wenigstens einen Umlenkbereichs entlang einer Linie können einfach realisiert werden.

Mit Verschiebungen entlang einer Linie können Umlenkungen der Lichtsignale in einer Dimension realisiert werden. Mit Verschiebungen des wenigstens einen Umlenkbereichs entlang einer Fläche können Umlenkungen der Lichtsignale in zwei Dimensionen realisiert werden.

Gemäß der ersten Alternative der Erfindung ist der wenigstens eine Umlenkbereich entlang wenigstens einer Geraden verschiebbar. Auf diese Weise kann eine eindimensionale Verschiebung einfach und reproduzierbar realisiert werden. Ferner ist der Platzbedarf für die Verschiebung geringer als bei einer Verschiebung entlang einer gebogenen Linie.

Gemäß der zweiten Alternative der Erfindung ist der wenigstens eine Umlenkbereich entlang wenigstens einer Ebene verschiebbar. Auf diese Weise kann eine zweidimensionale Verschiebung einfach reproduzierbar realisiert werden. Ferner ist der Platzbedarf für die Verschiebung geringer als bei einer Verschiebung entlang einer gekrümmten Fläche.

Vorteilhafterweise können eine zweidimensionale Verschiebung und eine zweidimensionalen Krümmung wenigstens eines Umlenkbereichs kombiniert sein. Auf diese Weise kann eine gezielte und reproduzierbare Umlenkung der Lichtsignale in zwei Dimensionen und damit ein Abtasten des Überwachungsbereichs in zwei Dimensionen realisiert werden.

Erfindungsgemäß weist die wenigstens eine Antriebseinrichtung wenigstens einen Linearantrieb auf oder besteht daraus.

Mit einem Linearantrieb kann der wenigstens eine Umlenkbereich entlang wenigstens Linie, insbesondere wenigstens einer Geraden, verschoben werden. Linearantriebe können darüber hinaus einfach und präzise gesteuert werden.

Ferner kann bei Linearantrieben insbesondere mithilfe von Codierern eine Position des wenigstens einen Umlenkbereichs genau bestimmt werden. Aus der Position des wenigstens einen Umlenkbereichs können die Auftreffstellen der Lichtsignale und unter Kenntnis der entsprechenden Krümmungen des wenigstens einen Umlenkbereichs in den Auftreffstellen ein Maß für die Umlenkung des Lichtsignals ermittelt werden.

Vorteilhafterweise kann die wenigstens eine Antriebseinrichtung wenigstens zwei Linearantriebe aufweisen. Auf diese Weise kann die wenigstens eine Umlenkbereich entlang einer Fläche, insbesondere einer Ebene, verschoben werden. Vorteilhafterweise können die wenigstens zwei Linearantriebe den wenigstens einen Umlenkbereich in insbesondere zueinander orthogonalen Richtungen verschieben.

Vorteilhafterweise kann wenigstens einer Antriebseinrichtung wenigstens einen Piezomotor aufweisen. Piezomotoren können mit geringeren Größen realisiert werden als bezüglich ihrer Leistung vergleichbare elektromagnetische Motoren.

Bei einer weiteren vorteilhaften Ausführungsform kann wenigstens ein Umlenkbereich in Richtung der auftreffenden Lichtsignalen aus betrachtet wenigstens teilweise konkav und/oder wenigstens teilweise konvex gekrümmt sein. Auf diese Weise kann je nach Bedarf eine entsprechende Umlenkung vorgegeben werden.

Dabei kann der wenigstens eine Umlenkbereich ausschließlich konkav oder ausschließlich konvex gekrümmt sein.

Alternativ kann wenigstens ein Teil des wenigstens einen Umlenkbereichs konkav gekrümmt sein und wenigstens ein Teil des wenigstens einen Umlenkbereichs kann konvex gekrümmt sein. Auf diese Weise können entsprechende Umlenkmuster vorgegeben werden, mit denen die Ausbreitungsachsen der Lichtsignale geschwenkt werden sollen.

Bei einer weiteren vorteilhaften Ausführungsform kann wenigstens ein Umlenkbereich wenigstens teilweise parabolisch und/oder wenigstens teilweise konisch und/oder wenigstens teilweise elliptisch und/oder wenigstens teilweise zirkular gekrümmt sein. Auf diese Weise können individuelle Umlenkmuster realisiert werden, mit denen die Ausbreitungsachsen der Lichtsignale geschwenkt werden sollen.

Vorteilhafterweise kann der wenigstens eine Umlenkbereich ausschließlich parabolisch oder ausschließlich konisch oder ausschließlich elliptisch oder ausschließlich zirkular gekrümmt sein. Alternativ kann der wenigstens eine Umlenkbereich Kombinationen der vorgenannten oder anderer Krümmungen aufweisen.

Vorteilhafterweise kann der wenigstens eine Umlenkbereich frei geformt sein. So kann mit dem wenigstens einen Umlenkbereich ein individuelles Umlenkmuster für die Lichtsignale realisiert werden.

Bei einer weiteren vorteilhaften Ausführungsform kann wenigstens ein Umlenkbereich wenigstens teilweise in einer Dimension gekrümmt sein und/oder wenigstens teilweise in zwei Dimensionen gekrümmt sein.

Vorteilhafterweise kann wenigstens ein Umlenkbereich wenigstens teilweise in einer Dimension gekrümmt sein. Eine Krümmung in einer Dimension kann einfacher realisiert werden als eine Krümmung in zwei Dimensionen. Ein Umlenkbereich, der in einer Dimension gekrümmt ist, kann einfach mit einer Verschiebung des wenigstens einen Umlenkbereichs entlang wenigstens einer Linie kombiniert werden. Auf diese Weise können die Ausbreitungsachsen von Lichtsignalen in einer Dimension geschwenkt werden.

Alternativ oder zusätzlich kann vorteilhafterweise wenigstens ein Umlenkbereich wenigstens teilweise in zwei Dimensionen, insbesondere zylindrisch, sphärisch, ellipsoidal oder dergleichen, gekrümmt sein. Ein in zwei Dimensionen gekrümmter Umlenkbereich kann einfach mit einer Verschiebung des wenigstens einen Umlenkbereichs entlang einer Fläche kombiniert werden. Auf diese Weise können die Ausbreitungsachsen von Lichtsignalen in zwei Dimensionen geschwenkt werden.

Alternativ kann wenigstens ein Umlenkbereich Areale, in denen dieser in einer Dimension gekrümmt ist, und Areale, in denen dieser in zwei Dimensionen gekrümmt ist, aufweisen. So kann ein Umlenkmuster zur Umlenkung der Ausbreitungsachsen der Lichtsignale individueller vorgegeben werden

Bei einer weiteren vorteilhaften Ausführungsform kann wenigstens ein Umlenkbereich periodisch bewegbar sein. Auf diese Weise können die Lichtsignale periodisch umgelenkt werden. So kann der Überwachungsbereich durch das entsprechende periodische Bewegen des wenigstens einen Umlenkbereichs mit Lichtsignalen abgetastet, also abgescannt, werden.

Vorteilhafterweise kann der wenigstens eine Umlenkbereich harmonisch schwingend bewegt, insbesondere verschoben, werden. Auf diese Weise kann ein sinusförmiger Verlauf der Auslenkung realisiert werden. So kann die entsprechende Auslenkung des wenigstens einen Umlenkbereichs aus einer Nullposition einfacher bestimmt werden.

Bei einer vorteilhaften Ausführungsform kann wenigstens ein Umlenkbereich wenigstens eine Spiegelfläche aufweisen und/oder wenigstens ein Umlenkbereich kann wenigstens eine diffraktive optische Struktur aufweisen.

Mit Spiegelflächen können Lichtsignale direkt umgelenkt werden. Spiegelflächen können einfach realisiert werden.

Mit diffraktiven optischen Strukturen können Lichtsignale geformt, insbesondere gebeugt, werden. Auf diese Weise können die Lichtsignale umgelenkt werden.

Vorteilhafterweise kann wenigstens eine diffraktive optische Struktur als diffraktives optisches Element ausgestaltet sein. Diffraktive optische Elemente (DoE) können individuell gefertigt und an die entsprechenden Anforderungen angepasst werden. Mit diffraktiven optischen Elementen kann eine gezielte und individuell vorgebbare Formung, insbesondere Beugung, der Lichtsignale erreicht werden.

Vorteilhafterweise kann wenigstens ein Umlenkbereich für die Lichtsignale durchlässig wirken. Auf diese Weise können eine Sendeeinrichtung und/oder eine Empfangseinrichtung des Messsystems auf der dem Überwachungsbereich gegenüberliegenden Seite des wenigstens ein Umlenkbereichs angeordnet sein.

Alternativ oder zusätzlich kann vorteilhafterweise wenigstens ein Umlenkbereich für die Lichtsignale reflektierend wirken. Auf diese Weise kann die Sendeeinrichtung und/oder die Empfangseinrichtung auf der gleichen Seite des wenigstens einen Umlenkbereichs wie der Überwachungsbereich angeordnet sein.

Vorteilhafterweise kann der wenigstens eine Umlenkbereich Polymer, Glas, Metall oder dergleichen oder einer Kombination von unterschiedlichen derartigen oder andersartigen geeigneten Materialien aufweisen oder daraus bestehen. Derartige Materialien können selbst als Spiegelflächen und/oder als Träger von Spiegelflächen und/oder als Träger, insbesondere Substrate, für diffraktive optische Strukturen wirken.

Ferner wird die Aufgabe erfindungsgemäß bei dem Messsystem dadurch gelöst, dass wenigstens ein Umlenkbereich wenigstens teilweise gekrümmt ist.

Erfindungsgemäß weist der wenigstens eine Umlenkbereich wenigstens eine Krümmung auf, sodass durch das Bewegen des wenigstens einen Umlenkbereichs relativ zu den entsprechenden Ausbreitungsachsen die auftreffenden Lichtsignale abhängig von der Krümmung in der Auftreffstelle abgelenkt wird.

Vorteilhafterweise kann die Sendeeinrichtung wenigstens eine Lichtquelle aufweisen. Vorteilhafterweise können von der Sendeeinrichtung gepulste Lichtsignale ausgesendet werden. Auf diese Weise kann die Dauer der Lichtsignale begrenzt werden. So kann einfacher eine Laufzeitmessung realisiert werden, da Anfang und Ende des Lichtsignals genau bestimmt werden können.

Vorteilhafterweise kann wenigstens eine Lichtquelle wenigstens einen Laser aufweisen. Bei dem Laser kann es sich vorteilhafterweise um einen Halbleiterlaser, insbesondere einen Oberflächenemitter (VCSEL), einen Kantenemitter, einen Faserlaser oder dergleichen handeln. Mit dem Laser können Lichtsignale in für das menschliche Auge sichtbaren oder nicht sichtbaren Frequenzbereichen emittiert werden. Ferner können mit einem Laser gepulste Lichtsignale ausgegeben werden. Die Pulslänge kann dabei genau vorgegeben werden.

Vorteilhafterweise kann wenigstens eine Sendeeinrichtung wenigstens ein optisches System, insbesondere eine optische Linse oder dergleichen, aufweisen. Mit dem optischen System können die erzeugten Lichtsignale geformt, insbesondere eine Strahldivergenz eingestellt werden.

Die wenigstens eine Empfangseinrichtung kann wenigstens einen Empfänger, insbesondere eine (Lawinen-)Fotodiode, ein Dioden-Array, ein CCD-Array oder dergleichen aufweisen. Mit derartigen Empfängern können Lichtsignale in insbesondere elektrische Signale umgewandelt werden. Elektrische Signale können mit einer elektronischen Steuer- und Auswerteeinrichtung des Messsystems verarbeitet werden.

Vorteilhafterweise kann wenigstens ein Empfänger wenigstens ein optisches System, insbesondere eine optische Linse oder ein Fischaugenobjektiv oder dergleichen, aufweisen. Auf diese Weise können Lichtsignale, die von wenigstens einem Umlenkbereich reflektiert werden, besser auf den Empfänger gerichtet werden.

Bei einer vorteilhaften Ausführungsform kann wenigstens ein Umlenkbereich relativ zu wenigstens einer Sendeeinrichtung verschiebbar sein und/oder wenigstens ein Umlenkbereich kann relativ zu wenigstens einer Empfangseinrichtung verschiebbar sein.

Vorteilhafterweise kann wenigstens ein Umlenkbereich relativ zu wenigstens einer Sendeeinrichtung verschiebbar sein. Auf diese Weise können Sender-Lichtsignale mit der Lichtsignalumlenkeinrichtung in den Überwachungsbereich umgelenkt werden.

Alternativ oder zusätzlich kann vorteilhafterweise wenigstens ein Umlenkbereich relativ zu wenigstens einer Empfangseinrichtung verschiebbar sein. Auf diese Weise können Empfangs-Lichtsignale mit der Lichtsignalumlenkeinrichtung zu der wenigstens einen Empfangseinrichtung umgelenkt werden. Empfangs-Lichtsignale sind Sender-Lichtsignale, welche von einem etwa im Überwachungsbereich vorhandenen Objekt reflektiert werden.

Vorteilhafterweise kann ein und derselbe Umlenkbereich wenigstens einer Sendeeinrichtung und wenigstens eine Empfangseinrichtung zugeordnet sein. Auf diese Weise können mit nur einem Umlenkbereich sowohl die Sender-Lichtsignale als auch die Empfangs-Lichtsignale umgelenkt werden.

Alternativ können wenigstens ein Umlenkbereich, der wenigstens einer Sendeeinrichtung zugeordnet ist, und wenigstens ein anderer Umlenkbereich, der wenigstens eine Empfangseinrichtung zugeordnet ist, mechanisch miteinander gekoppelt sein. Auf diese Weise können die Umlenkbereiche gemeinsam angetrieben werden. Ein Aufwand in Bezug auf Antriebseinrichtungen kann so verringert werden.

Bei einer weiteren vorteilhaften Ausführungsform kann wenigstens ein Umlenkbereich relativ zu wenigstens einer Ausbreitungsachse wenigstens eines Sende-Lichtsignals verschiebbar sein und/oder wenigstens ein Umlenkbereich kann relativ zu wenigstens einer Ausbreitungsachse wenigstens eines Empfangs-Lichtsignals verschiebbar sein. Auf diese Weise können Sender-Lichtsignale mit wenigstens einem Umlenkbereich in den Überwachungsbereich umgelenkt werden. Alternativ oder zusätzlich können mit wenigstens einem Umlenkbereich aus dem Überwachungsbereich kommende Empfangs-Lichtsignale zu wenigstens einer Empfangseinrichtung umgelenkt werden.

Außerdem wird die Aufgabe erfindungsgemäß bei dem Verfahren dadurch gelöst, dass wenigstens eine Ausbreitungsachse durch Bewegen wenigstens eines Umlenkbereichs unterschiedlichen Auftreffstellen des wenigstens einen Umlenkbereichs zugeordnet wird, welche aufgrund wenigstens einer Krümmung des wenigstens einen Umlenkbereichs unterschiedliche Einfallswinkel zu der wenigstens einen Ausbreitungsachse aufweisen.

Erfindungsgemäß weist der wenigstens eine Umlenkbereich wenigstens eine Krümmung auf, welche durch die Bewegung der wenigstens einen Umlenkbereich relativ zur wenigstens einen Ausbreitungsachse verschoben wird. Auf diese Weise wird die die Auftreffstelle der Lichtsignalen in Bereichen mit unterschiedlichen Einfallswinkeln zu der wenigstens einen Ausbreitungsachse verschoben, sodass die Lichtsignale unterschiedlich ausgelenkt werden.

Im Übrigen gelten die im Zusammenhang mit erfindungsgemäßen Lichtsignalumlenkeinrichtung, dem erfindungsgemäßen Messsystem und dem erfindungsgemäßen Verfahren und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1: eine Vorderansicht eines Personenkraftwagens mit einem Fahrerassistenzsystem und einem optischen Messsystem zur Überwachung eines Überwachungsbereichs in Fahrtrichtung vor dem Personenkraftwagen;
- Figur 2: eine Funktionsdarstellung des Personenkraftwagens aus der Figur 1 mit dem Fahrerassistenzsystem und dem Messsystem;
- Figur 3: eine Detailansicht einer Sendeeinrichtung und einer Lichtsignalumlenkeinrichtung gemäß einem ersten Ausführungsbeispiel des Messsystems aus den Figuren 1 und 2;
- Figur 4: eine Detailansicht einer Empfangseinrichtung und der Lichtsignalumlenkeinrichtung gemäß dem ersten Ausführungsbeispiel des Messsystems aus den Figuren 1 und 2;
- Figur 5: eine Detailansicht einer Lichtsignalumlenkeinrichtung gemäß einem zweiten Ausführungsbeispiel, welche bei dem Messsystem aus den Figuren 1 und 2 eingesetzt werden kann;
- Figur 6: eine Detailansicht einer Sendeeinrichtung und einer Lichtsignalumlenkeinrichtung gemäß einem dritten Ausführungsbeispiel, welche bei dem Messsystem aus den Figuren 1 und 2 verwendet werden kann.

In den Figuren sind gleiche Bauteile mit gleichen Bezugszeichen versehen.

### Ausführungsform(en) der Erfindung

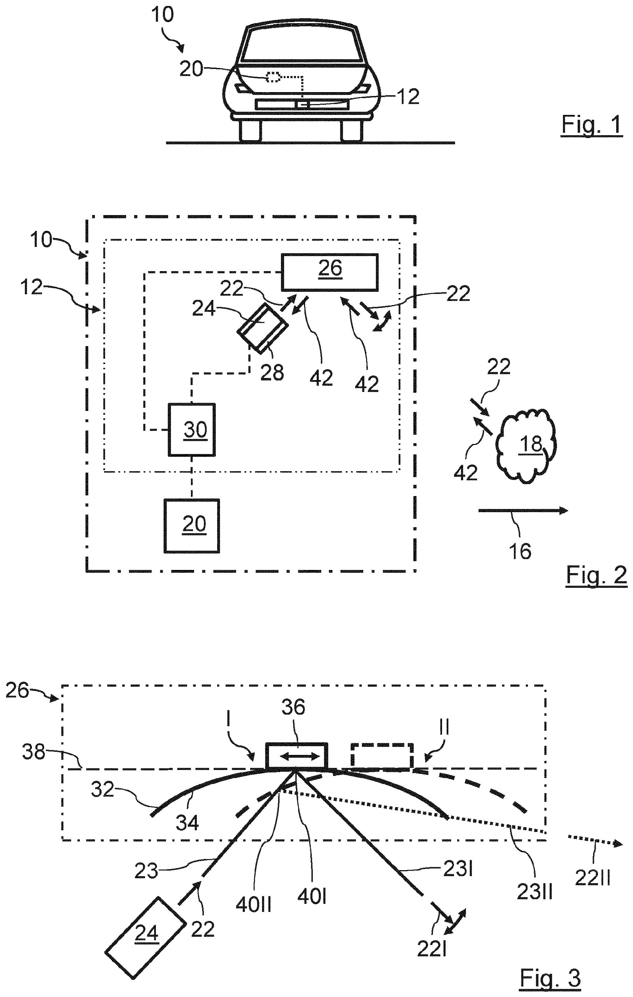

In der Figur 1 ist ein Fahrzeug 10 in Form eines Personenkraftwagens in einer Vorderansicht gezeigt. Das Fahrzeug 10 verfügt über ein optisches Messsystem 12, welches beispielhaft in der vorderen Stoßstange des Fahrzeugs 10 angeordnet ist. Mit dem optischen Messsystem 12 kann ein Überwachungsbereich 14, welcher in der Figur 2 angedeutet ist, in Fahrtrichtung 16 vor dem Fahrzeug 10 auf Objekte 18 hin überwacht werden. Mit dem optischen Messsystem 12 kann der Überwachungsbereich 14 abgetastet, also abgescannt, werden.

Das optische Messsystem 12 kann statt in der vorderen Stoßstange auch an einer anderen Stelle des Fahrzeugs 10 angeordnet und in eine andere Richtung gerichtet sein. Es können auch mehrere optische Messsysteme 12 an dem Fahrzeug 10 vorgesehen sein.

Bei den Objekten 18 kann es sich um stehende oder bewegte Objekte, beispielsweise um andere Fahrzeuge, Personen, Tiere, Hindernisse, Fahrbahnunebenheiten, Schlaglöcher oder Steine, Fahrbahnbegrenzungen, Freiräume, Parklücken oder dergleichen, handeln.

Ferner verfügt das Fahrzeug 10 über ein Fahrerassistenzsystem 20, mit welchem Fahrfunktionen, beispielsweise Lenkfunktionen, Bremsfunktionen und/oder Motorfunktionen des Fahrzeugs 10 wenigstens teilweise gesteuert oder ein Fahrer unterstützt werden können. Ferner können mit dem Fahrerassistenzsystem 20 Informationen an den Fahrer ausgegeben werden. Mithilfe des Fahrerassistenzsystems 20 kann das Fahrzeug 10 autonom oder teilautonom betrieben werden.

Das Messsystem 12 ist signaltechnisch mit dem Fahrerassistenzsystem 20 verbunden. Auf diese Weise können mit dem Messsystem 12 erlangte Informationen, beispielsweise über Objekte 18 im Überwachungsbereich 14, an das Fahrerassistenzsystem 20 übermittelt werden.

Das optische Messsystem 12 ist beispielhaft als Laserscanner ausgestaltet. Mit dem optischen Messsystem 12 werden Sender-Lichtsignale 22 beispielsweise in Form von Laserpulsen in den Überwachungsbereich 14 gesendet. Dabei wird die Richtung einer Ausbreitungsachse 23 der Sender-Lichtsignale 22 in den Überwachungsbereich 14 variiert, sodass der Überwachungsbereich 14 insgesamt abgetastet werden kann. Mit dem Messsystem 12 können Entfernungen, Richtungen und Geschwindigkeiten von erfassten Objekten 18 relativ zum Fahrzeug 10 ermittelt werden.

Die Ausbreitungsachse von Lichtsignalen im Sinne der Erfindung charakterisiert deren Hauptausbreitungsrichtung. Dabei können die Lichtsignale selbst bezogen auf die Ausbreitungsachse fokussiert oder defokussiert werden.

Das Messsystem 12 umfasst eine Sendeeinrichtung 24, eine Lichtsignalumlenkeinrichtung 26, eine Empfangseinrichtung 28 und eine elektronische Steuer- und Auswerteeinrichtung 30. Die Empfangseinrichtung 28 kann beispielsweise in Richtung senkrecht zur Zeichenebene in der Figur 2 betrachtet räumlich unter der Sendeeinrichtung 24 angeordnet sein. Die Empfangseinrichtung 28 ist daher in der Figur 2 teilweise von der Sendeeinrichtung 24 verdeckt gezeigt.

Die Sendeeinrichtung 24 weist einen Laser, beispielsweise einen Diodenlaser, auf, mit welchem die Sender-Lichtsignale 22 erzeugt und ausgesendet werden können. Ferner umfasst die Sendeeinrichtung 24 ein optisches System, beispielsweise mit einer Linse, mit der die Sender-Lichtsignale 22 geformt, beispielsweise in eine Richtung fokussiert und in eine andere Richtung beispielsweise senkrecht dazu aufgeweitet, werden können. Die Sendeeinrichtung 24 ist mit der Steuer- und Auswerteeinrichtung 30 steuerungstechnisch verbunden.

Die Lichtsignalumlenkeinrichtung 26 mit der Sendeeinrichtung 24 ist in der Figur 3 im Detail gezeigt, wobei der Strahlenverlauf der Sender-Lichtsignale 22 gezeigt ist.

Die Lichtsignalumlenkeinrichtung 26 weist einen Umlenkkörper in Form eines Umlenkspiegels 32 mit einer Spiegelfläche 34 als Umlenkbereich zur Umlenkung von Lichtsignalen auf. Dabei befindet sich die Spiegelfläche 34 auf der Seite, die der Sendeeinrichtung 24 zugewandt ist. Die Spiegelfläche 34 ist beispielhaft elliptisch gekrümmt. Beispielhaft ist die Spiegelfläche 34 von der Sendeeinrichtung 24 aus, also in Richtung der Sender-Lichtsignale 22 betrachtet konkav. Die Spiegelfläche 34 hat in Richtung senkrecht zur Zeichenebene betrachtet konstant die gleiche Krümmung. Beispielhaft erstreckt sich die Spiegelfläche 34 entlang eines Mantels einer Hälfte eines elliptischen Zylinders, dessen Achse senkrecht auf der Zeichenebene in der Figur 3 steht.

Ferner weist die Lichtsignalumlenkeinrichtung 26 eine Antriebseinrichtung 36 beispielhaft in Form eines linearen Piezomotors auf. Die Antriebseinrichtung 36 ist mit dem Umlenkspiegel 32 so verbunden, dass sie den Umlenkspiegel 32 und damit die Spiegelfläche 34 entlang einer gedachten Linie 38, beispielhaft einer Geraden, verschieben kann. Auf diese Weise kann die Spiegelfläche 34 entlang der gedachten Linie 38 periodisch beispielhaft in harmonischer Schwingung hin und her geschoben werden, was mit einem Doppelpfeil angedeutet ist. In der Figur 3 ist der Umlenkspiegel 32 in seiner Nullposition I mit durchgängigen Strichen gezeigt. Zum Vergleich ist der Umlenkspiegel 32 in der Figur 3 gestrichelt in einer beispielhaften Auslenkposition II gezeigt.

Die Spiegelfläche 34 befindet sich im Strahlweg der Sender-Lichtsignale 22 hinter der Sendeeinrichtung 24. Die Sender-Lichtsignale 22 werden auf die Spiegelfläche 34 gesendet und mit diesem abhängig von der Krümmung der Spiegelfläche 34 im Bereich einer Sender-Auftreffstelle 40 entsprechend in den Überwachungsbereich 14 gelenkt. Dabei wird die entsprechende Ausbreitungsachse 23 umgelenkt. Durch das Verschieben der Spiegelfläche 34 entlang der Linie 38 wird die Sender-Auftreffstelle 40 für die Sender-Lichtsignale 22 verändert.

Der besseren Unterscheidbarkeit wegen ist die Sender-Auftreffstelle 40 in der Nullposition I der Spiegelfläche 34 mit dem Index I versehen, also mit 40I bezeichnet. Entsprechend ist die Sender-Auftreffstelle 40 in der gezeigten Auslenkposition II der Spiegelfläche 34 mit dem Index II versehen, also mit 40II bezeichnet. In der Sender-Auftreffstelle 40I treffen die Sender-Lichtsignale 22 mit einem anderen Einfallswinkel auf die Spiegelfläche 34 wie in der Sender-Auftreffstelle 40II.

Durch die periodische Verschiebung der Spiegelfläche 34 wird die Ausbreitungsachse 23 der Sender-Lichtsignale 22 in dem Überwachungsbereich 14 in einer Dimension geschwenkt. So wird der Überwachungsbereich 14 mit den Sender-Lichtsignalen 22 abgetastet.

Der besseren Unterscheidbarkeit wegen sind in der Figur 3 die Sender-Lichtsignale 22, welche in der Nullposition I der Spiegelfläche 34 in der Sender-Auftreffstelle 40I reflektiert werden, und deren umgelenkte Ausbreitungsachse 23 mit dem Index I versehen, also mit 22I und 23I bezeichnet. Entsprechend sind die Sender-Lichtsignale 22, welche in der Auslenkposition II in der Sender-Auftreffstelle 40 II reflektiert werden, und deren umgelenkte Ausbreitungsachse 23 mit dem Index II versehen, also mit 22II und 23II bezeichnet, und zusätzlich gestrichelt gezeichnet.

Die Lichtsignalumlenkeinrichtung 26 verfügt ferner über eine hier nicht weiter interessierende Positionserfassungseinrichtung, mit welcher die momentane Auslenkung der Spiegelfläche 34 erfasst werden kann. Die Auslenkung der Spiegelfläche 34 charakterisiert die Umlenkwirkung auf die Sender-Lichtsignale 22.

Die Lichtsignalumlenkeinrichtung 26, respektive die Antriebseinrichtung 36 und die Positionserfassungseinrichtung, ist signaltechnisch mit der Steuer- und Auswerteeinrichtung 30 verbunden. So kann die Lichtsignalumlenkeinrichtung 26 mit der Steuer- und Auswerteeinrichtung 30 gesteuert oder geregelt werden. Außerdem kann die momentane Auslenkung der Spiegelfläche 34 an die Steuer- und Auswerteeinrichtung 30 übermittelt und mit dieser verarbeitet werden.

Die Sender-Lichtsignale 22 können an einem etwa im Überwachungsbereich 14 vorhandenen Objekt 18 reflektiert und als reflektierte Empfangs-Lichtsignale 42 zu der Lichtsignalumlenkeinrichtung 26 zurückgesendet werden. Mit der Lichtsignalumlenkeinrichtung 26 können die Empfangs-Lichtsignale 42 zu der Empfangseinrichtung 28 umgelenkt werden.

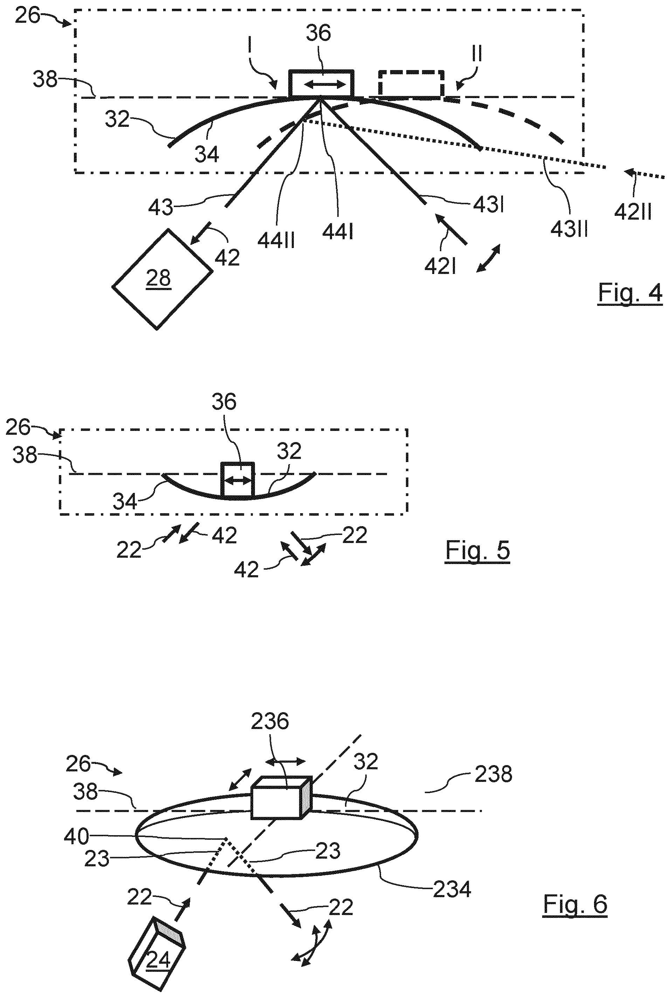

In der Figur 4 ist die Lichtsignalumlenkeinrichtung 26 mit der Empfangseinrichtung 28 und dem Strahlenverlauf der Empfangs-Lichtsignale 42 dargestellt. Dort ist die Spiegelfläche 34 beispielhaft entsprechend der Figur 3 in der Nullposition I und der Auslenkposition II gezeigt.

Der besseren Unterscheidbarkeit wegen sind die Empfangs-Lichtsignale 42, welche aus der Richtung kommen, in die die Sender-Lichtsignale 22I in der Nullposition I der Spiegelfläche 34 entsprechend der Figur 3 gesendet werden, und deren Ausbreitungsachse 43 mit den Index I versehen, also mit 42I und 43I bezeichnet. Die Empfangs-Lichtsignale 42 I treffen auf die Empfangs-Auftreffstelle 44I und werden entsprechend der dortigen Krümmung der Spiegelfläche 34 zu der Empfangseinrichtung 28 umgelenkt.

Die Empfangs-Lichtsignale 42, welche aus der Richtung kommen in die die Sender-Lichtsignale 22II in der Auslenkposition II der Spiegelfläche 34 entsprechend der Figur 3 gesendet werden, und deren Ausbreitungsachse 43 sind mit dem Index II versehen, also mit 42II und 43II bezeichnet, und zusätzlich gestrichelt dargestellt. Die Empfangs-Lichtsignale 42II treffen auf die Empfangs-Auftreffstelle 44II und werden entsprechend der dortigen Krümmung der Spiegelfläche 34, welche einen anderen Einfallswinkel bewirkt wie die Empfangs-Auftreffstelle 44I, ebenfalls zu der Empfangseinrichtung 28 umgelenkt.

Statt einer gemeinsamen Spiegelfläche 34 für die Sender-Lichtsignale 22 und die Empfangs-Lichtsignale 42 können auch getrennte Spiegelflächen für die Sender-Lichtsignale 22 und die Empfangs-Lichtsignale 42 vorgesehen sein. Die Spiegelflächen können mechanisch miteinander gekoppelt sein, sodass sie gemeinsam beispielsweise mit einer einzigen Antriebseinrichtung 36 angetrieben werden können.

Mit der Empfangseinrichtung 28 werden die Empfangs-Lichtsignale 42 empfangen. Die Empfangseinrichtung 28 verfügt über einen Empfänger, mit der die Empfangs-Lichtsignale 42 in Signale, beispielsweise elektrische Signale, umgewandelt werden können, die mit der Steuer- und Auswerteeinrichtung 30 verwertet werden können. Der Empfänger kann beispielsweise wenigstens eine (Lawinen-) Fotodiode, wenigstens ein Dioden-Array und/oder wenigstens ein CCD-Array oder dergleichen aufweisen.

Ferner weist die Empfangseinrichtung 28 ein optisches System, beispielsweise mit einer optischen Linse, auf, mit welchem die Empfangs-Lichtsignale 42 auf den Empfänger fokussiert werden können.

Die Empfangseinrichtung 28 ist signaltechnisch mit der Steuer- und Auswerteeinrichtung 30 verbunden. Auf diese Weise kann die Empfangseinrichtung 28 mit der Steuer- und Auswerteeinrichtung 30 gesteuert werden. Außerdem können so die Signale der Empfangseinrichtung 28 an die Steuer- und Auswerteeinrichtung 30 übermittelt werden.

Mit der Steuer- und Auswerteeinrichtung 30 kann das Messsystem 12 gesteuert werden. Die Steuer- und Auswerteeinrichtung 30 ist auf hardware- und softwaretechnischem Wege realisiert. Die Elemente der Steuer- und Auswerteeinrichtung 30 können als Einheit, beispielsweise in einem gemeinsamen Gehäuse, realisiert sein. Alternativ kann ein Teil der Elemente oder alle Elemente der Steuer- und Auswerteeinrichtung 30 voneinander getrennt realisiert sein.

In der Figur 5 ist eine Lichtsignalumlenkeinrichtung 26 gemäß einem zweiten Ausführungsbeispiel gezeigt. Diejenigen Elemente, die zu denen des ersten Ausführungsbeispiels aus den Figuren 3 und 4 ähnlich sind, sind mit denselben Bezugszeichen versehen. Das zweite Ausführungsbeispiel unterscheidet sich von dem ersten Ausführungsbeispiel dadurch, dass die Spiegelfläche 34 von der Sendeeinrichtung 24 und den auftreffenden Sender-Lichtsignalen 22 und Empfangs-Lichtsignalen 42 aus betrachtet konvex gekrümmt ist.

In der Figur 6 ist eine Lichtsignalumlenkeinrichtung 26 gemäß einem dritten Ausführungsbeispiel gezeigt. Diejenigen Elemente, die zu denen des ersten Ausführungsbeispiels aus den Figuren 3 und 4 ähnlich sind, sind mit denselben Bezugszeichen versehen. Das dritte Ausführungsbeispiel unterscheidet sich von dem ersten Ausführungsbeispiel dadurch, dass eine Spiegelfläche 234 des Umlenkspiegels 32 in zwei Dimensionen gekrümmt ist. Ferner kann die Spiegelfläche 234 mit der entsprechenden Antriebseinrichtung 236 entlang einer gedachten Fläche 238 in zwei Dimensionen verschoben werden. Die gedachte Fläche 238 wird beispielhaft durch eine Ebene gebildet, die durch zwei zueinander senkrechte Geraden, welche in der Figur 6 gestrichelt angedeutet sind, aufgespannt wird.

Mit der Lichtsignalumlenkeinrichtung 26 gemäß dem dritten Ausführungsbeispiel können die Ausbreitungsachsen 23 der Sender-Lichtsignale 22 in zwei Dimensionen in den Überwachungsbereich 14 geschwenkt werden. So kann der Überwachungsbereich 14 in zwei Dimensionen abgetastet werden. Entsprechend können Empfangs-Lichtsignale 42 aus dem Überwachungsbereich 14 mit der der Spiegelfläche 234 zu der in der Figur 6 nicht gezeigten Empfangseinrichtung 28 umgelenkt werden.

## Patentansprüche

1. Lichtsignalumlenkeinrichtung (26) für ein optisches Messsystem (12) zur Erfassung von Objekten (18) in einem Überwachungsbereich (14),
- mit wenigstens einem Umlenkkörper (32), der wenigstens einen Umlenkbereich (34; 234) zur Umlenkung von Lichtsignalen (22, 42) aufweist,
- mit wenigstens einer Antriebseinrichtung (36; 236), mit der der wenigstens eine Umlenkkörper (32) so angetrieben werden kann, dass der wenigstens eine Umlenkbereich (34; 234) relativ zu jeweiligen Ausbreitungsachsen (23, 43) von Lichtsignalen (22, 42), welche auf den wenigstens einen Umlenkbereich (34; 234) treffen, bewegt werden kann,
wobei wenigstens ein Umlenkbereich (34; 234) wenigstens teilweise gekrümmt ist,
**dadurch gekennzeichnet, dass**
der wenigstens eine Umlenkbereich (34; 234) entlang wenigstens einer Linie (38) oder entlang einer Fläche (238) verschiebbar ist und dass die wenigstens eine Antriebseinrichtung (36; 236) wenigstens einen Linearantrieb aufweist oder daraus besteht.

2. Lichtsignalumlenkeinrichtung nach einem der vorigen Ansprüche, **dadurch gekennzeichnet, dass** der wenigstens ein Umlenkbereich (34; 234) in Richtung der auftreffenden Lichtsignalen (22, 42) aus betrachtet wenigstens teilweise konkav und/oder wenigstens teilweise konvex gekrümmt ist.

3. Lichtsignalumlenkeinrichtung nach einem der vorigen Ansprüche, **dadurch gekennzeichnet, dass** der wenigstens ein Umlenkbereich (34; 234) wenigstens teilweise parabolisch und/oder wenigstens teilweise konisch und/oder wenigstens teilweise elliptisch und/oder wenigstens teilweise zirkular gekrümmt ist.

4. Lichtsignalumlenkeinrichtung nach einem der vorigen Ansprüche, **dadurch gekennzeichnet, dass** der wenigstens ein Umlenkbereich (34; 234) wenigstens teilweise in einer Dimension gekrümmt ist oder wenigstens teilweise in zwei Dimensionen gekrümmt ist.

5. Lichtsignalumlenkeinrichtung nach einem der vorigen Ansprüche, **dadurch gekennzeichnet, dass** der wenigstens ein Umlenkbereich (34; 234) periodisch bewegbar ist.

6. Lichtsignalumlenkeinrichtung nach einem der vorigen Ansprüche, **dadurch gekennzeichnet, dass** der wenigstens ein Umlenkbereich (34; 234) wenigstens eine Spiegelfläche aufweist und/oder wenigstens ein Umlenkbereich wenigstens eine diffraktive optische Struktur aufweist.

7. Optisches Messsystem (12) zur Erfassung von Objekten (18) in einem Überwachungsbereich (14),
- mit wenigstens einer Sendeeinrichtung (24), mit der Lichtsignale (22) erzeugt werden können,
- mit wenigstens einer Lichtsignalumlenkeinrichtung (26), mit der Lichtsignale (22, 42) umgelenkt werden können,
- und mit wenigstens einer Empfangseinrichtung (28), mit der Lichtsignale (42) empfangen werden können,
- wobei die wenigstens eine Lichtsignalumlenkeinrichtung (26) aufweist
- wenigstens einen Umlenkkörper (32), der wenigstens eine Umlenkbereich (34; 234) aufweist zur Umlenkung von Lichtsignalen (22, 42), und
- wenigstens eine Antriebseinrichtung (36; 236), mit der der wenigstens eine Umlenkkörper (32) so angetrieben werden kann, dass der wenigstens eine Umlenkbereich (34; 234) relativ zu jeweiligen Ausbreitungsachsen (23, 43) von Lichtsignalen (22, 42), welche auf den wenigstens einen Umlenkbereich (34; 234) treffen, bewegt werden kann,
wobei wenigstens ein Umlenkbereich (34; 234) wenigstens teilweise gekrümmt ist,
**dadurch gekennzeichnet, dass**
der wenigstens eine Umlenkbereich (34; 234) relativ zu wenigstens einer Sendeeinrichtung (24) verschiebbar ist und/oder wenigstens ein Umlenkbereich (34; 234) relativ zu wenigstens einer Empfangseinrichtung (28) verschiebbar ist und dass die wenigstens eine Antriebseinrichtung (36; 236) wenigstens einen Linearantrieb aufweist oder daraus besteht.

8. Optisches Messsystem nach Anspruch7, **dadurch gekennzeichnet, dass** der wenigstens ein Umlenkbereich (34; 234) relativ zu wenigstens einer Ausbreitungsachse (23) wenigstens eines Sende-Lichtsignals (22) verschiebbar ist und/oder wenigstens ein Umlenkbereich (34; 234) relativ zu wenigstens einer Ausbreitungsachse (43) wenigstens eines Empfangs-Lichtsignals (42) verschiebbar ist.

9. Verfahren zum Betreiben einer Lichtsignalumlenkeinrichtung (26) für ein optisches Messsystem (12) zur Erfassung von Objekten (18) in einem Überwachungsbereich (14),
- bei dem Lichtsignale (22, 42) mit wenigstens einem Umlenkbereich (34; 234) wenigstens eines Umlenkkörpers (32) umgelenkt werden,
- wobei der wenigstens eine Umlenkkörper (32) mit wenigstens einer Antriebseinrichtung (36; 236) so angetrieben wird, dass der wenigstens eine Umlenkbereich (34; 234) relativ zu jeweiligen Ausbreitungsachsen (23, 43) von Lichtsignalen (22, 42), welche auf den wenigstens einen Umlenkbereich (34; 234) treffen, bewegt wird,
- wobei wenigstens eine Ausbreitungsachse (23, 43) durch Bewegen wenigstens eines Umlenkbereichs (34; 234) unterschiedlichen Auftreffstellen (40, 44) des wenigstens einen Umlenkbereichs (34; 234) zugeordnet wird, welche aufgrund wenigstens einer Krümmung des wenigstens einen Umlenkbereichs (34; 234) unterschiedliche Einfallswinkel zu der wenigstens einen Ausbreitungsachse (23, 43) aufweisen,
**dadurch gekennzeichnet, dass**
der wenigstens eine Umlenkbereich (34; 234) entlang wenigstens einer Linie (38) oder entlang einer Fläche (238) verschoben wird und dass die wenigstens eine Antriebseinrichtung (36; 236) wenigstens einen Linearantrieb aufweist oder daraus besteht.

## Claims

1. Light signal deflection device (26) for an optical measuring system (12) for detecting objects (18) in a monitoring area (14),
- with at least one deflection body (32) that has at least one deflection area (34; 234) for deflecting light signals (22, 42),
with at least one drive device (36; 236), with which the at least one deflection body (32) can be driven so that the at least one deflection area (34; 234) can be moved relative to respective propagation axes (23, 43) of light signals (22, 42) which hit the at least one deflection area (34; 234),
wherein at least one deflection area (34; 234) is at least partially curved,
**characterized in that**
the at least one
deflection area (34; 234) is movable along at least one line (38) or
along a surface (238)
and that the
at least one drive device (36; 236) comprises at least one linear drive or consists thereof.

2. Light signal deflection device according to one of the preceding claims, **characterized in that** the
at least one deflection area (34; 234), viewed in the direction of the incident light signals (22, 42), is at least partially concave and/or at least partially convex curved.

3. Light signal deflection device according to one of the preceding claims, **characterized in that** the
at least one deflection area (34; 234) is at least partially parabolically and/or at least partially conically and/or at least partially elliptically and/or at least partially circularly curved.

4. Light signal deflection device according to one of the preceding claims, **characterized in that** the
at least one deflection area (34; 234) is at least partially curved in one dimension or
at least partially curved in two dimensions.

5. Light signal deflection device according to one of the preceding claims, **characterized in that** the
at least one deflection area (34; 234) is periodically movable.

6. Light signal deflection device according to one of the preceding claims, **characterized in that** the
at least one deflection area (34; 234) has at least one mirror surface and/or at least one deflection area has at least one diffractive optical structure.

7. Optical measuring system (12) for detecting objects (18) in a monitoring area (14),
- with at least one transmitting device (24), with which light signals (22) can be generated,
- with at least one light signal deflection device (26), with which light signals (22, 42) can be deflected,
- and with at least one receiving device (28), with which light signals (42) can be received, wherein the at least one light signal deflection device (26) comprises
- at least one deflection body (32), which has at least one deflection area (34; 234) for deflecting light signals (22, 42), and
- at least one drive device (36; 236), with which the at least one deflection body (32) can be driven so that the at least one deflection area (34; 234) can be moved relative to respective propagation axes (23, 43) of light signals (22, 42) which hit the at least one deflection area (34; 234),
wherein at least one deflection area (34; 234) is at least partially curved,
**characterized in that**
the at least one
deflection area (34; 234) is movable relative to at least one transmitting device (24) and/or at least one deflection area (34; 234) is movable relative to at least one receiving device (28)
and that the
at least one drive device (36; 236) comprises at least one linear drive or consists thereof.

8. Optical measuring system according to claim 7, **characterized in that** the at least
one deflection area (34; 234) is movable relative to at least one propagation axis (23) of at least one transmitting light signal (22) and/or at least one deflection area (34; 234) is movable relative to at least one propagation axis (43) of at least one receiving light signal (42).

9. Method for operating a light signal deflection device (26) for an optical measuring system (12) for detecting objects (18) in a monitoring area (14),
in which light signals (22, 42) are deflected with at least one deflection area (34; 234) of at least one deflection body (32),
- wherein the at least one deflection body (32) is driven with at least one drive device (36; 236) so that the at least one deflection area (34; 234) is moved relative to respective propagation axes (23, 43) of light signals (22, 42) which hit the at least one deflection area (34; 234),
wherein at least one propagation axis (23, 43) is assigned to different impact points (40, 44) of the at least one deflection area (34; 234) by moving at least one deflection area (34; 234), which have different angles of incidence to the at least one propagation axis (23, 43) due to at least one curvature of the at least one deflection area (34; 234),
**characterized in that**
the at least one
deflection area (34; 234) is moved along at least one line (38) or
along a surface (238)
and that the
at least one drive device (36; 236) comprises at least one linear drive or consists thereof.

## Revendications

1. Dispositif de déviation de signaux lumineux (26) pour un système de mesure optique (12) destiné à la détection d'objets (18) dans une zone de surveillance (14),
- comprenant au moins un corps de déviation (32) qui présente au moins une zone de déviation (34 ; 234) pour la déviation de signaux lumineux (22, 42),
comprenant au moins un dispositif d'entraînement (36 ; 236), avec lequel l'au moins un corps de déviation (32) peut être entraîné de manière à ce que l'au moins une zone de déviation (34 ; 234) puisse être déplacée par rapport aux axes de propagation respectifs (23, 43) des signaux lumineux (22, 42) qui frappent l'au moins une zone de déviation (34 ; 234),
dans lequel au moins une zone de déviation (34 ; 234) est au moins partiellement courbée, **caractérisé en ce que**
l'au moins une
zone de déviation (34 ; 234) peut être déplacée le long d'au moins une ligne (38) ou
le long d'une surface (238)
et **en ce que**
l'au moins un dispositif d'entraînement (36 ; 236) comprend au moins un entraînement linéaire ou est constitué de celui-ci.

2. Dispositif de déviation de signaux lumineux selon l'une des revendications précédentes,
**caractérisé en ce que**
l'au moins une zone de déviation (34 ; 234), vue dans la direction des signaux lumineux incidents (22, 42), est courbée au moins partiellement de manière concave et/ou au moins partiellement de manière convexe.

3. Dispositif de déviation de signaux lumineux selon l'une des revendications précédentes,
**caractérisé en ce que**
l'au moins une zone de déviation (34 ; 234) est courbée au moins partiellement de manière parabolique et/ou au moins partiellement de manière conique et/ou au moins partiellement de manière elliptique et/ou au moins partiellement de manière circulaire.

4. Dispositif de déviation de signaux lumineux selon l'une des revendications précédentes,
**caractérisé en ce que**
l'au moins une zone de déviation (34 ; 234) est au moins partiellement courbée dans une dimension ou
au moins partiellement courbée dans deux dimensions.

5. Dispositif de déviation de signaux lumineux selon l'une des revendications précédentes,
**caractérisé en ce que**
l'au moins une zone de déviation (34 ; 234) peut être déplacée périodiquement.

6. Dispositif de déviation de signaux lumineux selon l'une des revendications précédentes,
**caractérisé en ce que**
l'au moins une zone de déviation (34 ; 234) comprend au moins une surface réfléchissante et/ou au moins une zone de déviation comprend au moins une structure optique diffractive.

7. Système de mesure optique (12) pour la détection d'objets (18) dans une zone de surveillance (14),
- comprenant au moins un dispositif d'émission (24), avec lequel des signaux lumineux (22) peuvent être générés,
- comprenant au moins un dispositif de déviation de signaux lumineux (26), avec lequel des signaux lumineux (22, 42) peuvent être déviés,
- et comprenant au moins un dispositif de réception (28), avec lequel des signaux lumineux (42) peuvent être reçus,
dans lequel l'au moins un dispositif de déviation de signaux lumineux (26) comprend
- au moins un corps de déviation (32) qui présente au moins une zone de déviation (34 ; 234) pour la déviation de signaux lumineux (22, 42), et
- au moins un dispositif d'entraînement (36 ; 236), avec lequel l'au moins un corps de déviation (32) peut être entraîné de manière à ce que l'au moins une zone de déviation (34 ; 234) puisse être déplacée par rapport aux axes de propagation respectifs (23, 43) des signaux lumineux (22, 42) qui frappent l'au moins une zone de déviation (34 ; 234),
dans lequel au moins une zone de déviation (34 ; 234) est au moins partiellement courbée,
**caractérisé en ce que**
l'au moins une
zone de déviation (34 ; 234) peut être déplacée par rapport à au moins un dispositif d'émission (24) et/ou au moins une zone de déviation (34 ; 234) peut être déplacée par rapport à au moins un dispositif de réception (28)
et **en ce que**
l'au moins un dispositif d'entraînement (36 ; 236) comprend au moins un entraînement linéaire ou est constitué de celui-ci.

8. Système de mesure optique selon la revendication 7, **caractérisé en ce que** l'au moins une zone de déviation (34 ; 234) peut être déplacée par rapport à au moins un axe de propagation (23) d'au moins un signal lumineux d'émission (22) et/ou au moins une zone de déviation (34 ; 234) peut être déplacée par rapport à au moins un axe de propagation (43) d'au moins un signal lumineux de réception (42).

9. Procédé pour faire fonctionner un dispositif de déviation de signaux lumineux (26) pour un système de mesure optique (12) destiné à la détection d'objets (18) dans une zone de surveillance (14),
dans lequel des signaux lumineux (22, 42) sont déviés par au moins une zone de déviation (34 ; 234) d'au moins un corps de déviation (32),
- dans lequel l'au moins un corps de déviation (32) est entraîné par au moins un dispositif d'entraînement (36 ; 236) de manière à ce que l'au moins une zone de déviation (34 ; 234) soit déplacée par rapport aux axes de propagation respectifs (23, 43) des signaux lumineux (22, 42) qui frappent l'au moins une zone de déviation (34 ; 234),
dans lequel au moins un axe de propagation (23, 43) est associé à différents points d'impact (40, 44) de l'au moins une zone de déviation (34 ; 234) par déplacement d'au moins une zone de déviation (34 ; 234), lesquels présentent différents angles d'incidence par rapport à l'au moins un axe de propagation (23, 43) en raison d'au moins une courbure de l'au moins une zone de déviation (34 ; 234),
**caractérisé en ce que**
l'au moins une
zone de déviation (34 ; 234) est déplacée le long d'au moins une ligne (38) ou
le long d'une surface (238)
et **en ce que**
l'au moins un dispositif d'entraînement (36 ; 236) comprend au moins un entraînement linéaire ou est constitué de celui-ci.
